# EUROPEAN PATENT APPLICATION

(11) **EP 4 521 824 A1**
(43) Date of publication of application: **12.03.2025**
(21) Application number: 23799271.4
(22) Date of filing: 05.05.2023
(51) Int. Cl.: H04W 40/22

(54) **METHOD EXECUTED BY USER EQUIPMENT, AND USER EQUIPMENT**

(30) Priority: 06.05.2022 CN 202210489396
(71) Applicant: Sharp Kabushiki Kaisha, Sakai City, Osaka 590-8522 (JP)
(72) Inventor: LIU, Renmao, Pudong, Shanghai 201206 (CN); LIU, Lei, Pudong, Shanghai 201206 (CN)
(74) Representative: Müller Hoffmann & Partner
(86) International application number: PCT/CN2023/092183
(87) International publication number: WO 2023/213285

(57) **Abstract**

The present invention provides a method performed by a user equipment and a user equipment. The method comprises: when a PC5 radio resource control (PC5-RRC) connection is established between UE1 and UE2, or when a PC5-RRC connection is established between UE1 and UE3, performing, by UE1, an operation including at least one of the following operations: applying a configuration of a first SL-RLC; applying a configuration of a second SL-RLC; initiating the configuration of the first SL-RLC; initiating the configuration of the second SL-RLC; and initiating a configuration of a remote UE local ID, wherein if UE1 is a source UE, UE2 is a relay UE and UE3 is a target UE; if UE1 is a target UE, UE2 is a relay UE and UE3 is a source UE; and if UE1 is a relay UE, UE2 is a source UE and UE3 is a target UE.

## Description

### TECHNICAL FIELD

The present invention relates to the technical field of wireless communications. More specifically, the present invention relates to a method for performing parameter configuration in a sidelink relay architecture by a user equipment, and a corresponding user equipment.

### BACKGROUND

At the RAN#91 plenary meeting in March 2020, a work item on NR sidelink relaying of Release 17 was proposed (see Non-Patent Document: RP-210904, New Study Item on NR Sidelink Relaying), and was approved. Regarding the latest release of the work item, see Non-Patent Document: RP-212601, Revised WID: NR Sidelink Relay. One of the goals of the work item is to standardize a sidelink control plane procedure, such as management of an RRC connection, reception of a system message, and reception of paging. The goals of the work item further include standardizing a selection and reselection procedure of a sidelink relay UE.

At the RAN#94 plenary meeting in December 2021, a work item on NR sidelink relay enhancements of Release 18 was proposed (see Non-Patent Document: RP-213585, New WID on NR sidelink relay enhancements), and was approved. One of the goals of the work item is to standardize a control plane procedure of U2U (UE-to-UE) relay.

The present invention discusses a procedure of configuring related parameters required for data and signaling transmission by a source UE and a target UE via a relay UE.

### SUMMARY

A method performed by a user equipment (UE) according to a first aspect of the present invention comprises: when a PC5-RRC connection is established between a first user equipment (UE1) and a second user equipment (UE2), or when a PC5-radio resource control (PC5-RRC) connection is established between UE1 and a third user equipment (UE3), performing, by UE1, an operation comprising at least one of the following operations: applying a configuration of a first sidelink radio link control (SL-RLC); applying a configuration of a second sidelink radio link control (SL-RLC); initiating the configuration of the first sidelink radio link control (SL-RLC); initiating the configuration of the second sidelink radio link control (SL-RLC); and initiating a configuration of a remote UE local ID, wherein if UE1 is a source UE, UE2 is a relay UE and UE3 is a target UE; if UE1 is a target UE, UE2 is a relay UE and UE3 is a source UE; and if UE1 is a relay UE, UE2 is a source UE and UE3 is a target UE, the first SL-RLC referring to a sidelink radio link control (SL-RLC) between the target UE and the relay UE, and the second SL-RLC referring to a sidelink radio link control (SL-RLC) between the relay UE and the source UE.

According to the method of the first aspect of the present invention, the sidelink radio link controls are used to carry an SL-SRB3 between the source UE and the target UE, and the SL-SRB3 is used to carry a PC5-RRC message.

According to the method of the first aspect of the present invention, the SL-RLCs configure a radio link control (RLC) configuration and/or medium access control (MAC) configuration information, wherein the RLC configuration comprises a logical channel ID and a sequence number length, and the MAC configuration information comprises a priority and a logical channel group.

According to the method of the first aspect of the present invention, the configurations of the SL-RLCs are specified by a protocol; are default; or are configured by UE1, UE2, or UE3.

According to the method of the first aspect of the present invention, if the configurations of the SL-RLCs are specified by the protocol, the logical channel ID is a fixed value specified by the protocol, and the logical channel group is a fixed value specified by the protocol; and if the SL-RLCs are default, the logical channel ID is a default value, and the logical channel group is a default value.

According to the method of the first aspect of the present invention, if the configurations of the SL-RLCs are specified by the protocol, the configurations of the SL-RLCs specified by the protocol are employed for at least one of the following messages; and if the configurations of the SL-RLCs are default, the default configurations of the SL-RLCs are employed for at least one of the following messages, wherein the following messages are: a first sidelink RRC reconfiguration (RRCReconfigurationSidelink) message; a first sidelink RRC reconfiguration (RRCReconfigurationSidelink) message since the PC5-RRC connection is established; and a PC-RRC message before the first sidelink RRC reconfiguration (RRCReconfigurationSidelink) message since the PC5-RRC connection is established.

A method performed by a user equipment (UE) according to a second aspect of the present invention comprises: configuring, by a first user equipment (UE1), remote UE local IDs for a second user equipment (UE2) and a third user equipment (UE3); and receiving, by UE1, a configuration complete message sent by UE2, wherein if UE1 is a source UE, UE2 is a relay UE and UE3 is a target UE; if UE1 is a target UE, UE2 is a relay UE and UE3 is a source UE; and if UE1 is a relay UE, UE2 is a source UE and UE3 is a target UE.

According to the method of the second aspect of the present invention, UE1 respectively sends configuration messages to UE2 and UE3 to configure the remote UE local IDs, wherein the configuration messages include at least one of the following information: the remote UE local ID of the source UE and/or the remote UE local ID of the target UE; a source layer-2 ID (source L2 ID) of the source UE; a source layer-2 ID (source L2 ID) of the target UE; and a source layer-2 ID (source L2 ID) of the relay UE.

According to the method of the second aspect of the present invention, when at least one of the following conditions is satisfied, UE1 considers that the remote UE local ID configuration of the source UE and/or the remote UE local ID configuration of the target UE in the corresponding configuration message needs to be applied, wherein the at least one condition is that: a sidelink RRC reconfiguration failure *(RRCReconfigurationFailureSidelink)* message sent by UE3 has not been received; and a sidelink RRC reconfiguration complete *(RRCReconfigurationCompleteSidelink)* message sent by UE3 has been received; or, when at least one of the following conditions is satisfied, UE1 continues to use the remote UE local ID of the source UE and/or the remote UE local ID of the target UE before the corresponding configuration message, wherein the at least one condition is that: the sidelink RRC reconfiguration failure *(RRCReconfigurationFailureSidelink)* message sent byUE3 has been received; the sidelink RRC reconfiguration complete *(RRCReconfigurationCompleteSidelink)* message sent by UE3 has not been received; and a timer corresponding to UE3 for monitoring whether a response is returned for a sidelink RRC reconfiguration (RRCReconfigurationSidelink) message is running.

A user equipment according to a third aspect of the present invention comprises: a processor; and a memory storing instructions, wherein the instructions, when run by the processor, perform the method according to any one of the first aspect and the second aspect.

### Beneficial Effects of Present Invention

By means of the present invention, parameters required for L2 U2U data and signaling transmission can be properly configured for the relay UE and the remote UE, thereby achieving normal transmission of data and signaling.

### BRIEF DESCRIPTION OF THE DRAWINGS

FIG. 1 is a schematic diagram showing UE-to-UE relay.
FIG. 2 is a schematic diagram showing control plane protocol stacks of a source UE, a relay UE, and a target UE in a U2N sidelink layer-2 (L2) relay architecture.
FIG. 3 is a flowchart showing a basic procedure of a method performed by a user equipment (UE) according to Embodiment 1 of the present invention.
FIG. 4 is a flowchart showing a basic procedure of a method performed by a UE according to Embodiment 2 of the present invention.
FIG. 5 is a simplified structural block diagram of a UE related to the present invention.

### DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

The following describes some terms involved in the present invention. For the specific meanings of the terms, please see the latest 3GPP standards and specifications.
UE: User Equipment
NR: New Radio
MAC: Medium Access Control
MAC CE: MAC control element
RLC: Radio Link Control
SDAP: Service Data Adaptation Protocol
PDCP: Packet Data Convergence Protocol
RRC: Radio Resource Control
RRC_CONNECTED: RRC connected state
RRC_INACTIVE: RRC inactive state
RRC_IDLE: RRC idle state
RAN: Radio Access Network
Sidelink: sidelink
SCI: Sidelink Control Information
AS: Access Stratum
IE: Information Element
CE: Control Element
MIB: Master Information Block
NR: New Radio
SIB: System Information Block
NG-RAN: NG Radio Access Network
DCI: Downlink Control Information
ADAPT: adaptation layer
PHY: physical layer
RB: Radio Bearer
DRB: Data Radio Bearer
SRB: Signalling Radio Bearer
eDRX: Extended DRX
Uu: Uu
ProSe: Proximity based Services
V2X: Vehicle-to-Everything
NAS: Non-Access Stratum
PC5-S: PC5 signalling
SRAP: Sidelink Relay Adaptation Protocol
SL-SRB: Sidelink Signalling Radio Bearer
U2U: UE-to-UE
L2: Layer 2
RSRP: Reference Signal Received Power
SL-RSRP: Sidelink RSRP
SD-RSRP: Sidelink Discovery RSRP

In the present invention, a network, a base station, and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

In the present invention, user equipment (UE) may refer to an NR device that supports an NR sidelink relay function as described in the background, may also refer to an NR device that supports an NR sidelink relay architecture, and may also refer to an NR device or an LTE device of another type. A source UE and a target UE may refer to two UEs connected to each other via a relay UE in a UE-to-UE relay architecture. One of the UEs is the source UE and the other is the target UE. The source UE may also be referred to as an initiation UE, and the target UE may also be referred to as a destination UE.

For a U2U scenario, "relay UE", "U2U relay UE", and "L2 U2U relay UE" are interchangeable. "Remote UE", "U2U remote UE", and "L2 U2U remote UE" are interchangeable. "Source UE", "source remote UE", "U2U source UE", "U2U source remote UE", "L2 U2U source UE", and "L2 U2U source remote UE" are interchangeable. "Target UE", "target remote UE", "U2U target UE", "U2U target remote UE", "L2 U2U target UE", and "L2 U2U target remote UE" are interchangeable.

In the present invention, sidelink, SL, and PC5 are interchangeable. "Feedback", "report", "reporting", "transmission", and "notification" are interchangeable. "Use", "start", "employ", "apply", "enable", "activate", "implement", etc., are interchangeable.

In the present invention, an upper layer may refer to a ProSe layer, a V2X layer, a NAS layer, or a PCS-S protocol layer. In the present invention, the ProSe layer, the V2X layer, the NAS layer, and the PC5-S protocol layer are interchangeable.

In the present invention, an RLC channel, an RLC entity, and an RLC bearer are interchangeable. Optionally, limitations of "relay" and/or "PC5 relay" may further be added before the foregoing terms. SL-RLC refers to a PC5 RLC bearer or a PC5 RLC channel for carrying data and signaling transmission between the source UE and the target UE, and the SL-RLC may be between the source UE and the relay UE and/or between the relay UE and the target UE.

It should be noted that in the present specification, two items that are connected by "and", "or", or "and/or" may indicate different expression methods for the same intent in different application scenarios. It is possible that a relationship of including or being included in is present between the two items, but it is not necessary that the two items refer to completely different content.

Hereinafter, a description will be given of related art of the present invention.

A PC5 interface is an interface for performing control plane and user plane sidelink communication between UE and UE. For sidelink unicast, a PC5-RRC connection is an AS layer logical connection between a pair of a source layer-2 ID and a target layer-2 ID. Establishment of one PC5 unicast link corresponds to establishment of one PC5-RRC connection.

In the unicast PC5-RRC connection, the SL-SRB is used to carry a PC5-S message and a PC5-RRC message. An SL-SRB0 is used to carry a PC5-S message before establishment of PC5-S security, an SL-SRB 1 is used to carry a PC5-S message for establishment procedures of PC5-S security, an SL-SRB2 is used to carry a PC5-S message after establishment of PC5-S security, and an SL-SRB3 is used to carry a PC5-RRC message.

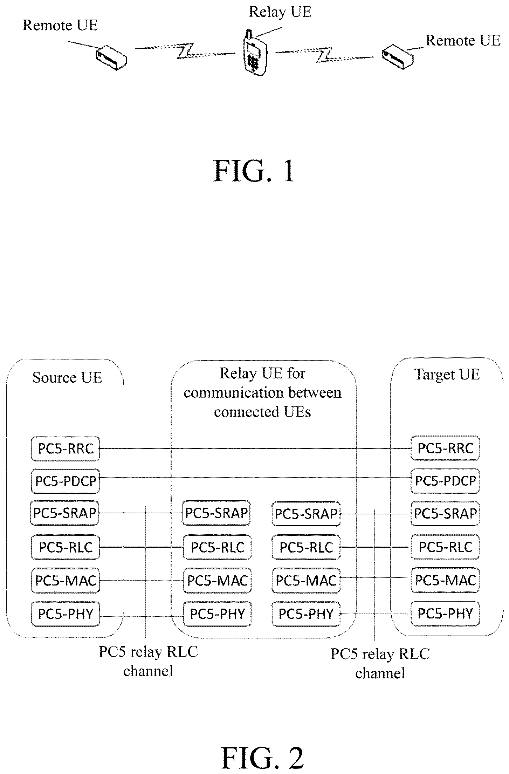

UE-to-UE relaying is as shown in FIG. 1. The left and the right are remote UEs, and the middle is a relay UE. The remote UEs are respectively connected to the relay UE via PC5 interfaces. Because the two remote UEs are far from each other or because a communication environment is poor, the relay UE is needed to relay and forward signaling and data therebetween.

UE-to-UE relay scenarios include:
1) in coverage: the two remote UEs (i.e., the source UE and the target UE) and the relay UE are all in coverage;
2) out of coverage: the two remote UEs (i.e., the source UE and the target UE) and the relay UE are all out of coverage; and
3) partial coverage: among the two remote UEs and the relay UE, at least one UE is in coverage, and at least one UE is out of coverage.

For the NR sidelink L2 U2U relay architecture, two remote UEs (i.e., a source UE and a target UE) each set up a PC5-RRC connection to the relay UE, and the two remote UEs (i.e., the source UE and the target UE) also set up a PC5-RRC connection therebetween. The two remote UEs (i.e., the source UE and the target UE) communicate with each other via the relay UE.

For a U2U sidelink layer-2 (L2) relay architecture, control plane protocol stacks of a source UE, a relay UE, and a target UE are as shown in FIG. 2.

A PC5 RLC channel refers to an RLC channel used for PC5 interface communication. In the U2U architecture, when the source UE is connected to the target UE via the relay UE, the PC5 relay RLC channel between the source UE and the relay UE, and the PC5 relay RLC channel between the relay UE and the target UE may be used to carry data and signaling between the source UE and the target UE, namely, to carry the SL-SRB and the SL-DRB between the source UE and the target UE.

A PC5-SRAP entity refers to an SRAP entity for PC5 interface communication, and a PC5-SRAP is an adaptation layer for the L2 U2U architecture. In the L2 U2U architecture, when the source UE is connected to the target UE via the relay UE, the PC5-SRAP of the source UE determines, according to a configured mapping relationship between end-to-end bearers (i.e., bearers between the source UE and the target UE) and PC5 relay RLC channels, a PC5 relay RLC channel corresponding to uplink data/signaling (data sent by the source UE to the target UE) and a PC5 relay RLC channel corresponding to downlink data from the target UE and forwarded by the relay UE. PC5-SRAP entities respectively corresponding to the source UE and the target UE are also present in the relay UE. A PC5-SRAP is also present in the target UE, and has the same function as the PC5-SRAP in the source UE. The entity and the layer, such as a SRAP entity or a SRAP layer, are interchangeable herein.

The present invention discusses a procedure of configuring related parameters required for data and signaling transmission by a source UE and a target UE via a relay UE in an L2 U2U scenario. By means of the present invention, parameters required for L2 U2U data and signaling transmission can be properly configured, thereby achieving normal transmission of data and signaling.

Hereinafter, several embodiments of the present invention for addressing the above problems are described in detail.

### Embodiment 1

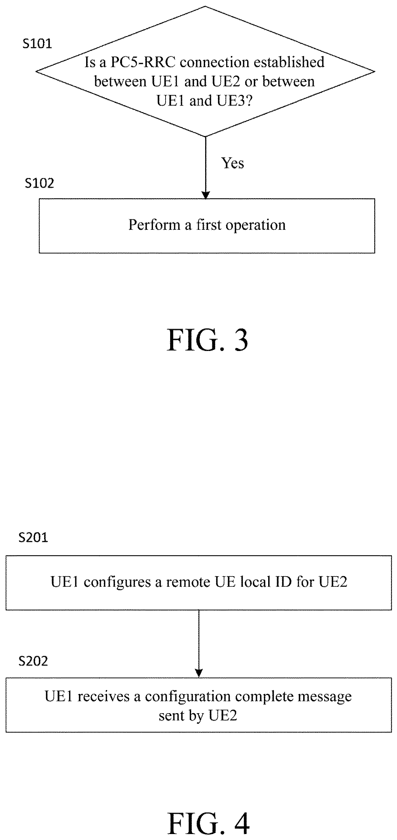

Optionally, for a source UE (which may be set as UE1), as shown in FIG. 3, in step S101, when a PC5-RRC connection is established between the source UE (UE1) and a relay UE (which may be set as UE2) or when a PC5-RRC connection is established between the source UE (UE1) and a target UE (which may be set as UE3) (that is, it is determined to be "yes"), a first operation is performed. The first operation includes at least one of the following operations:
- applying a configuration of a first SL-RLC;
- applying a configuration of a second SL-RLC;
- initiating the configuration of the first SL-RLC;
- initiating the configuration of the second SL-RLC; and
- initiating a configuration of a remote UE local ID;

Optionally, for a target UE (which may be set as UE1), as shown in FIG. 3, in step S101, when a PC5-RRC connection is established between the target UE (UE1) and a relay UE (which may be set as UE2) or when a PC5-RRC connection is established between the target UE (UE1) and a source UE (which may be set as UE3) (that is, it is determined to be "yes"), the first operation is performed.

Optionally, for a relay UE (which may be set as UE1), as shown in FIG. 3, in step S101, when a PC5-RRC connection is established between the relay UE (UE1) and a source UE (which may be set as UE2) or when a PC5-RRC connection is established between the relay UE (UE1) and a target UE (which may be set as UE3) (that is, it is determined to be "yes"), the first operation is performed.

The first SL-RLC refers to an SL-RLC between the target UE and the relay UE, and the second SL-RLC refers to an SL-RLC between the relay UE and the source UE. The SL-RLCs are used to carry a bearer including, but not limited to, SL-SRB3 between the source UE and the target UE.

Optionally, the configurations of the SL-RLCs include, but are not limited to, an RLC configuration and/or MAC configuration information. The RLC configuration includes, but is not limited to: information such as a logical channel ID and a sequence number length. The MAC configuration information includes, but is not limited to: information such as a priority and a logical channel group.

Optionally, the UE may initiate the configuration of the first SL-RLC and/or the configuration of the second SL-RLC by means of a sidelink RRC reconfiguration (RRCReconfigurationSidelink) message or other PC5-RRC messages, in which the configurations of the SL-RLCs are carried.

Optionally, the configurations of the SL-RLCs may be specified by a protocol, be default, or be configured by a UE (which may be the source UE, the target UE, or the relay UE).

Optionally, when the configurations of the SL-RLCs are specified by the protocol, the logical channel ID may be a fixed value specified by the protocol, and the logical channel group may also be a fixed value specified by the protocol. Optionally, when the configurations of the SL-RLCs are specified by the protocol, the configurations of the SL-RLCs specified by the protocol may be employed for at least one of the following messages:
- a first RRCReconfigurationSidelink message;
- a first RRCReconfigurationSidelink message since the PC5-RRC connection is established; and
- a PC-RRC message before the first RRCReconfigurationSidelink message since the PC5-RRC connection is established.

Optionally, when the SL-RLCs are default values, the logical channel ID may be a default value (namely, it may be reconfigured subsequently), and the logical channel group may also be a default value (namely, it may be reconfigured subsequently). Optionally, when the SL-RLCs are default values, the default configurations of the SL-RLCs may be employed for at least one of the following messages:
- a first RRCReconfigurationSidelink message;
- a first RRCReconfigurationSidelink message since the PC5-RRC connection is established; and
- a PC-RRC message before the first RRCReconfigurationSidelink message since the PC5-RRC connection is established.

The remote UE local ID may include: a remote UE local ID of the source UE and/or a remote UE local ID of the target UE. Optionally, the UE may initiate the configuration of the remote UE local ID of the source UE and/or the configuration of the remote UE local ID of the target UE by means of a sidelink RRC reconfiguration (RRCReconfigurationSidelink) message or other PC5-RRC messages. The messages include at least one of the following information: the remote UE local ID of the source UE and/or the remote UE local ID of the target UE, a source L2 ID and/or destination L2 ID of the source UE, a source L2 ID and/or destination L2 ID of the target UE, and a source L2 ID and/or destination L2 ID of the relay UE.

An RRC layer establishes a PC5-RRC connection via an indication of an upper layer. That is, after receiving the indication of the upper layer, the RRC layer may consider that the PC5-RRC connection is established. Therefore, "PC5-RRC connection establishment being indicated by the upper layer" and "PC5-RRC connection establishment" are interchangeable.

### Embodiment 2

On the basis of Embodiment 1, the present embodiment includes steps S201 and S202, as shown in FIG. 4.

If UE1 is a source UE, UE2 is a relay UE and UE3 is a target UE. If UE1 is a target UE, UE2 is a relay UE and UE3 is a source UE. If UE1 is a relay UE, UE2 is a source UE and UE3 is a target UE.

Optionally, in step S201, UE1 configures remote UE local IDs for UE2 and UE3.

Optionally, UE1 sends configuration messages (for example, a first RRCReconfigurationSidelink message and a second RRCReconfigurationSidelink message) to configure the remote UE local IDs for UE2 and UE3, respectively. The messages include at least one of the following information: the remote UE local ID of the source UE and/or the remote UE local ID of the target UE, a source L2 ID of the source UE, a source L2 ID of the target UE, and a source L2 ID of the relay UE. When UE1 sends the configuration messages, a timer may be started for monitoring whether a peer UE replies with a response message. If the peer UE has not yet replied with a response when the timer expires, it is considered that the link is abnormal, and the PC5-RRC connection with the peer UE is released.

The first RRCReconfigurationSidelink message is an RRCReconfigurationSidelink message sent by UE1 to UE2, and the second RRCReconfigurationSidelink message is an RRCReconfigurationSidelink message sent by UE1 to UE3.

Optionally, in step S202, UE1 receives a configuration complete message (e.g., a sidelink RRC reconfiguration complete *(RRCReconfigurationCompleteSidelink)* message) sent by UE2.

Optionally, if at least one of the following conditions is satisfied, UE1 considers that the remote UE local ID configuration of the source UE and/or the remote UE local ID configuration of the target UE in the corresponding RRCReconfigurationSidelink message (i.e., the first RRCReconfigurationSidelink message) needs to be applied:
- a sidelink RRC reconfiguration failure *(RRCReconfigurationFailureSidelink)* message sent by UE3 has not been received; and
- *RRCReconfigurationCompleteSidelink* sent by UE3 has been received.

Optionally, if at least one of the following conditions is satisfied, UE1 continues to use the remote UE local ID of the source UE and/or the remote UE local ID of the target UE before the corresponding RRCReconfigurationSidelink message (i.e., the first RRCReconfigurationSidelink message):
- a configuration failure message (e.g. a *RRCReconfigurationFailureSidelink* message) sent by UE3 has been received;
- a configuration complete message (e.g. a *RRCReconfigurationCompleteSidelink* message) sent by UE3 has not been received; and
- a timer corresponding to UE3 for monitoring whether a response is replied to the RRCReconfigurationSidelink message is running.

If UE1 configures the remote UE local ID of the source UE and/or the remote UE local ID of the target UE via the RRCReconfigurationSidelink message for the first time after the PC-RRC connection is established, the remote UE local ID of the source UE and/or the remote UE local ID of the target UE before the RRCReconfigurationSidelink message may be default values.

Optionally, step S202 may also be that UE1 receives a *RRCReconfigurationFailureSidelink* message sent by UE2. Accordingly, UE1 continues to use the remote UE local ID of the source UE and/or the remote UE local ID of the target UE before the RRCReconfigurationSidelink message (i.e., the first RRCReconfigurationSidelink message), while sending to UE3 a new second *RRCReconfigurationSidelink* message carrying the remote UE local ID of the source UE and/or the remote UE local ID of the target UE before the second *RRCReconfigurationSidelink* message. Optionally, before the new second *RRCReconfigurationSidelink* message is sent, it may also be determined whether a timer for monitoring the second *RRCReconfigurationSidelink* message is running, and if the timer is running, the timer is stopped.

Step S202 may also be modified as: receiving, by UE1, a *RRCReconfigurationCompleteSidelink* message sent by UE3, or receiving a *RRCReconfigurationFailureSidelink* message from UE3. In the corresponding processing flows, only "UE2" and "UE3" need to be interchanged in the above steps, and the description is still true for "first RRCReconfigurationSidelink" and "second RRCReconfigurationSidelink".

Optionally, before step S201, UE2 and/or UE3 may send to UE1 a PC5-RRC message (for example, but not limited to: a remote UE local ID request (RemoteUELocalIdRequest) message) to request configuration of a remote UE local ID. After receiving the request message, UE1 configures remote UE local IDs for UE2 and UE3, and performs step S201.

The remote UE local ID in the present invention is only an example, and the above configuration procedures are also applicable to other parameters (for example, an SRAP configuration and a channel mapping configuration) that need to be consistent with, equal to, or influential to each other among the source UE, the relay UE, and the target UE.

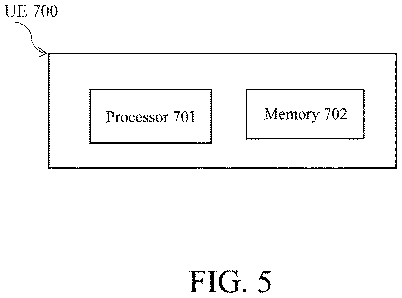

FIG. 5 is a simplified structural block diagram of a UE related to the present invention. As shown in FIG. 5, a UE 700 includes a processor 701 and a memory 702. The processor 701 may include, for example, a microprocessor, a microcontroller, and an embedded processor. The memory 702 may include, for example, a volatile memory (such as a random access memory (RAM)), a hard disk drive (HDD), a non-volatile memory (such as a flash memory), or other memories. The memory 702 has program instructions stored thereon. The instructions, when run by the processor 701, can perform the above method performed by a user equipment described in detail in the present invention.

The program running on the device according to the present invention may be a program that enables a computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by a user equipment (UE), comprising:
when a PC5-RRC connection is established between a first user equipment (UE1) and a second user equipment (UE2), or when a PC5 radio resource control (PC5-RRC) connection is established between UE1 and a third user equipment (UE3), performing, by UE1, an operation comprising at least one of the following operations:
applying a configuration of a first sidelink radio link control (SL-RLC);
applying a configuration of a second sidelink radio link control (SL-RLC);
initiating the configuration of the first sidelink radio link control (SL-RLC);
initiating the configuration of the second sidelink radio link control (SL-RLC); and
initiating a configuration of a remote UE local ID,
wherein
if UE1 is a source UE, UE2 is a relay UE and UE3 is a target UE;
if UE1 is a target UE, UE2 is a relay UE and UE3 is a source UE; and
if UE1 is a relay UE, UE2 is a source UE and UE3 is a target UE,
the first SL-RLC referring to a sidelink radio link control (SL-RLC) between the target UE and the relay UE, and
the second SL-RLC referring to a sidelink radio link control (SL-RLC) between the relay UE and the source UE.

2. The method according to claim 1, wherein
the sidelink radio link controls are used to carry an SL-SRB3 between the source UE and the target UE, and
the SL-SRB3 is used to carry a PC5 radio resource control (PC5-RRC) message.

3. The method according to claim 2, wherein
the SL-RLCs configure a radio link control (RLC) configuration and/or medium access control (MAC) configuration information,
wherein
the RLC configuration comprises a logical channel ID and a sequence number length, and
the MAC configuration information comprises a priority and a logical channel group.

4. The method according to claim 3, wherein
the configurations of the SL-RLCs are specified by a protocol; are default; or are configured by UE1, UE2, or UE3.

5. The method according to claim 4, wherein
if the configurations of the SL-RLCs are specified by the protocol, the logical channel ID is a fixed value specified by the protocol, and the logical channel group is a fixed value specified by the protocol; and
if the SL-RLCs are default, the logical channel ID is a default value, and the logical channel group is a default value.

6. The method according to claim 4, wherein
if the configurations of the SL-RLCs are specified by the protocol, the configurations of the SL-RLCs specified by the protocol are employed for at least one of the following messages; and
if the configurations of the SL-RLCs are default, the default configurations of the SL-RLCs are employed for at least one of the following messages,
wherein the following messages are:
a first sidelink RRC reconfiguration (RRCReconfigurationSidelink) message;
a first sidelink RRC reconfiguration (RRCReconfigurationSidelink) message since the PC5-RRC connection is established; and
a PC-RRC message before the first sidelink RRC reconfiguration (RRCReconfigurationSidelink) message since the PC5-RRC connection is established.

7. A method performed by a user equipment (UE), comprising:
configuring, by a first user equipment (UE1), remote UE local IDs for a second user equipment (UE2) and a third user equipment (UE3); and
receiving, by UE1, a configuration complete message sent by UE2,
wherein
if UE1 is a source UE, UE2 is a relay UE and UE3 is a target UE;
if UE1 is a target UE, UE2 is a relay UE and UE3 is a source UE; and
if UE1 is a relay UE, UE2 is a source UE and UE3 is a target UE.

8. The method according to claim 7, wherein
UE1 respectively sends configuration messages to UE2 and UE3 to configure the remote UE local IDs,
wherein the configuration messages include at least one of the following information:
the remote UE local ID of the source UE and/or the remote UE local ID of the target UE;
a source layer-2 ID (source L2 ID) of the source UE;
a source layer-2 ID (source L2 ID) of the target UE; and
a source layer-2 ID (source L2 ID) of the relay UE.

9. The method according to claim 8, wherein
when at least one of the following conditions is satisfied, UE1 considers that the remote UE local ID configuration of the source UE and/or the remote UE local ID configuration of the target UE in the corresponding configuration message needs to be applied,
wherein the at least one condition is that:
a sidelink RRC reconfiguration failure *(RRCReconfigurationFailureSidelink)* message sent by UE3 has not been received; and
a sidelink RRC reconfiguration complete *(RRCReconfigurationCompleteSidelink)* message sent by UE3 has been received;
or,
when at least one of the following conditions is satisfied, UE1 continues to use the remote UE local ID of the source UE and/or the remote UE local ID of the target UE before the corresponding configuration message,
wherein the at least one condition is that:
the sidelink RRC reconfiguration failure *(RRCReconfigurationFailureSidelink)* message sent by UE3 has been received;
the sidelink RRC reconfiguration complete *(RRCReconfigurationCompleteSidelink)* message sent by UE3 has not been received; and
a timer corresponding to UE3 for monitoring whether a response is returned for a sidelink RRC reconfiguration (RRCReconfigurationSidelink) message is running.

10. A user equipment, comprising:
a processor; and
a memory storing instructions,
wherein the instructions, when run by the processor, perform the method according to any one of claims 1 to 9.
